# EUROPEAN PATENT APPLICATION

(11) **EP 1 087 619 A1**
(43) Date of publication of application: **28.03.2001**
(21) Application number: 00202780.3
(22) Date of filing: 04.08.2000
(51) Int. Cl.: H04N 7/173, H04N 5/14, G06F 17/30, G11B 27/00

(54) **A system for acquiring and replaying television programs**

(30) Priority: 25.08.1999 IT TO990724
(71) Applicant: RAI RADIOTELEVISIONE ITALIANA S.p.A., 10135 Torino (IT)
(72) Inventor: Boch, Laurent, 10137 Torino (IT)
(74) Representative: Spandonari, Carlo, Dr. Ing.

(57) **Abstract**

Several multimedial acquisition stations (A1, A2, ...) receive television signals from respective selected channels, and extract from them audio signals for generating successive digital files, each comprising an audio segment of a predetermined duration; moreover, they extract video signals for acquiring from them fixed screenshots at each change of scene or after a predetermined time interval from the previous screenshot, each screenshot being converted into an image file. Finally, each station periodically generates an index file containing a set of hypertextual links pointing to said audio and video files. The audio, video and index files are stored by a server (S) in its mass storage, and are accessible from one or more video terminals (T1, T2, ...) which are linked to the server, using a browser program for reading the index files and consequently the audio and video files.

## Description

This invention is concerned with a system for synthetically acquiring and replaying television programs, which can enable a user to quickly locate a desired TV event and to learn the essential information linked to such event.

Due to the great influence that TV broadcasts have in modern society, there is a need, at least for certain professional categories, to obtain at least a summary knowledge of programs that have been broadcast in the recent past, e.g. during the past week, for a variety of purposes, ranging from mere cultural interest to a need for checking the contents of a program in view of commenting it or quoting it in a subsequent program. Although it is of course possible to continuously tape programs broadcast by individual TV stations, such an approach would not solve the above problem, because, due to the long duration of the programs and to the sequential access, finding the desired event would be a long and awkward process, in fact unfeasible except for special cases.

It is therefore the main object of the invention to provide a system for synthetically acquiring and replaying television programs, which enables a user to readily access TV programs of the recent past, in order to obtain knowledge of their salient points, without having to sequentially explore long recordings, as was necessary in the past.

Another object is to provide the above system so that both the data selection and collection, on the one hand, and the data organization and display, on the other hand, are completely automated.

Still another object is to provide the above system with a limited use of hardware resources.

The invention achieves the above and other objects and advantages, such as will appear from the following disclosure, with a system for synthetically acquiring and replaying television programs having the features set out in claim 1.

The dependent claims define other advantageous features.

The invention will be further described in more detail in the following disclosure, with reference to a preferred embodiment, which is illustrated, by way of non-limiting example, in the attached drawings, wherein:
Fig. 1 is a block diagram of a system for synthetically acquiring and replaying television programs according to the invention;
Fig. 2 is a diagram showing the organization of a file system in a server computer, belonging to the system of the invention;
Fig. 3 is a flowchart of an algorithm for detecting changes of scene, used in the system of the invention;
Fig. 4 is a diagram illustrating the services which are offered to a user by the system of the invention;
Fig. 5 is a screenshot on the user station in an initial step of an interrogation;
Fig. 6 is a schematic screenshot on a user station at another step of a request; and
Fig. 7 is a screenshot on the user station in still another step of an interrogation.

The invention is based on the recognition that in any television program, whether a news program, an interview, a talk show, a variety show, and even a fiction or documentary film, the salient or significant information reside firstly in the audio portion of the program (i.e., the verbal narration or the conversation between the guests of a show or the actor in a movie), and secondly in a collection of stationary scenes that are typical or representative of the program, while, on the other hand, the dynamic evolution of the motions from one typical fixed frame to the next generally adds nothing significant to the understanding or the knowledge of the events in the program under consideration.

In order to determine automatically, without having recourse to the judgment of an observer, which shots should be regarded as typical or representative, the inventors have recognized as effective the following strategy:
- on the one hand, acquire an image representative of each shot, preferably an image that is equidistant in time between two successive changes of scene, a change of scene being defined as either a switching of cameras, or a cutting operation, or a change due to a rotation or zooming or to a title effect;
- on the other hand, whenever the scene remains substantially constant over a considerable period of time, say a few minutes, acquire a sample shot at fixed intervals, of about 20 seconds.

Reason and experience show that a shot not belonging to shots selected as above practically never has a significant content, except in extremely rare circumstances.

As a means for automatically identifying changes of scene, an algorithm of analysis based on the luminance signal can be used. The algorithm can be implemented as a computer program as will be explained below.

The invention provides for both the audio and video components of the image to be stored as digital files in a computer's mass storage, and for a database of said files to be maintained and used for the subsequent synthetic replay of the program to the users.

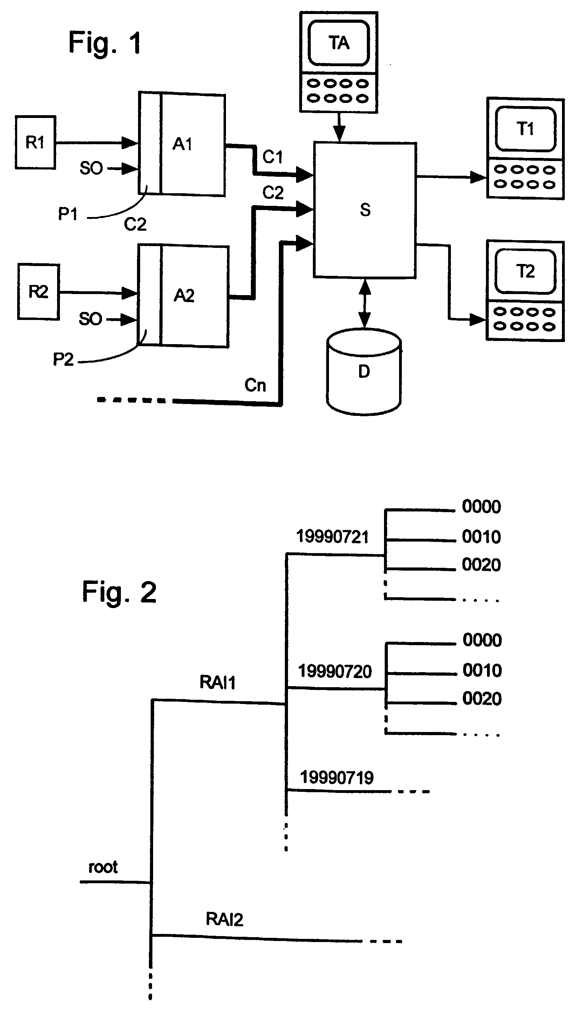

In order to put such concepts into practice, and with reference to Fig. 1, the invention provides a number of computerized acquisition stations A1, A2, ..., each dedicated to a different television broadcasting channel. Each station A1, A2, ..., comprises a PC-class computer, e.g. incorporating a Pentium microprocessor, a core memory of a few tens of MB, a rigid disk, say of EIDE type, having a capacity of a few GB, and further provided with a PAL video-grabbing card P1, P2, including an A/D converter, e.g. a Matrox Meteor card. Moreover, each station receives a time signal SO, for an accurate time synchronization. Finally, each station is provided with a network card, having a transmission rate of 10 to 100 Mbit/sec, and including an associated network managing software (Lan Manager), for connection to a server S through connections C1, C2, ...

Each recording station receives, through its own PAL card, a composite television signal from a respective TV tuner and demodulator device R1, R2, ..., known per se, and tuned to a selected TV broadcasting channel.

Each station A1, A2, ... analyzes the digitized video signal, locates the changes of scene, and extracts from it, for each change of scene, a representative image which it then delivers as a file to server S, through a respective connection C1, C2, ... Server S stores the data received from the various stations in a mass storage such as a disk D, as a number of subsequent distinct files. Moreover, each acquisition station A1, A2, ... also acquires the audio signal, digitizes it and splits it into segments of substantially uniform duration, which are also stored as files on disk D.

Preferably, each acquisition station also stores the audio and video files on a disk of its own, so that each connection C1, C2, ... may not only be active at the acquisition time, but also, alternatively, be made operative with a delay, without causing interruptions of the acquisition service.
Server S is linked to one or more user stations T1, T2, ..., preferably comprising respective PC-class computers, through which users can access the audio and video files, as explained below in more detail.

Preferably, for purposes of data organization, and with reference to Fig. 2, the file system of server S comprises a distinct directory of each acquisition station, i.e., for each monitored channel, e.g. *RAI1*, *RAI*, etc. Within each channel directory, a number of main subdirectories are set up for each day, in the format *YYYYMMDD* (e.g., *19990721* for 21 July 1999). Finally, within each date subdirectory, further subdivisions of the twenty-four-hour periods are made into intervals of ten minutes, labeled with the format *HHMM* (from *0000* to *2350*).

Each acquisition station A1, A2, ... codes the acquired shots in JPEG coding, and the file so generated is labeled with the beginning time of the scene, in the format *HHMMSSCC.jpg*, comprising hour, minutes, seconds and hundredths of a second, although the accuracy of the time reference will in general be worse than a hundredth of a second. For economy of disk space occupation, the JPEG files are created with a resolution of 384 x 288 pixels, at a desired compression, so that the image file size will generally not exceed 15 to 20 KB.

Audio signals are preferably acquired by the respective acquisition stations with an 8-KHz sampling rate at 16 bit, and are coded as PCM or as IMA-ADPCM, with or without a header, and the files so generated are labeled with the hour and minute when the audio portion started, in the format *a1HHMM00.wav.* Alternatively, the MPEG1-Layer 3 coding could be used (also known as MP3).

Finally, at ten-minutes intervals, each acquisition station generates an index file, which is labeled with hour and minutes, in the format *HHMM.idx,* substantially comprising a table of names of audio files and video files, as generated in the station itself. If desired, program titles or annotations may be entered manually into the table, from an auxiliary video terminal TA, which may coincide with one of the user stations T1, T2, ...

For the automatic execution of the above described operations, each acquisition station is governed by a managing program clocked by the above-mentioned time signal SO.

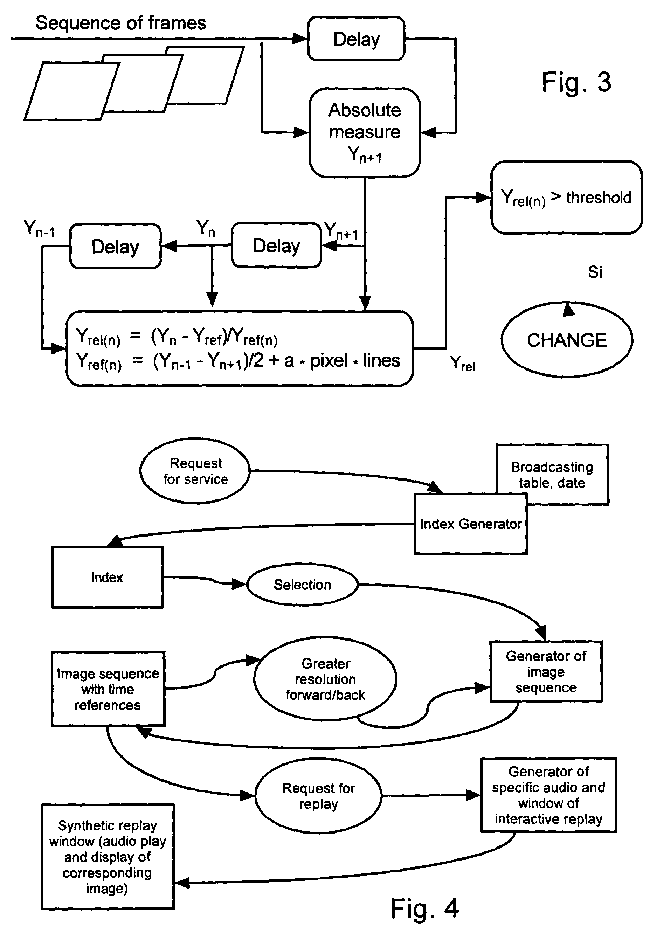

Having now reference to Fig. 3, a preferred algorithm for the detection of the changes of scene will now be described. The algorithm uses the luminance component in the video signal, as sampled at the appropriate resolution, and computes a measure between each pair of successive frames, preferably limiting the measure to the first half-frame. The measure consists in executing the sum of the absolute values of the differences between the average luminance values of blocks of 8x8 pixels. A null or low value of that sum is an indication that the image has remained substantially unchanged from one frame to the next, while a high value of that measure shows that a change of scene is probably taking place, although a high number of false detections are possible (when the threshold is low) or, on the other hand, a high number of misses are also possible (with a too high threshold).

Therefore, as shown on Fig. 3, the absolute measures of the luminance differences *Y*_{*n+1*} are used, through further delay elements supplying *Y*_{*n*}, *Y*_{*n*}₋₁, to compare the results of several successive absolute measures and to compute, as an outcome, a relative measure showing, with a high degree of reliability, the net change of scene, while making the selection of the threshold less critical.

Server S is a computer using a suitable multi-tasking, multi-user operating system, for instance Linux, with a fixed disk for archiving, e.g. of EIDE type, having a capacity of at least 4 GB, depending on requirements, i.e. depending on the number of monitored channels and/or programs and on the number of programming days that are to be kept in the archive. Server S receives video files, audio files and index files from acquisition stations A1, A2, ... and stores them on disk D. Furthermore, server S is provided with software for file-system sharing, such as the software known as "Samba" in the Linux operating system, so that it can manage the transfer of files from the acquisition stations to its own file system, as known to the person skilled in the art.

Finally, server S is provided with software for responding to the users' requests, according to HTML procedures. This allows the user, sitting before a graphic terminal T1, T2, ..., such as a PC computer, to access the index files, and through them to the above-described audio and video files, by means of a suitable browser program, such as one of the commercially distributed programs *Netscape Navigator* or *Internet Explorer.*

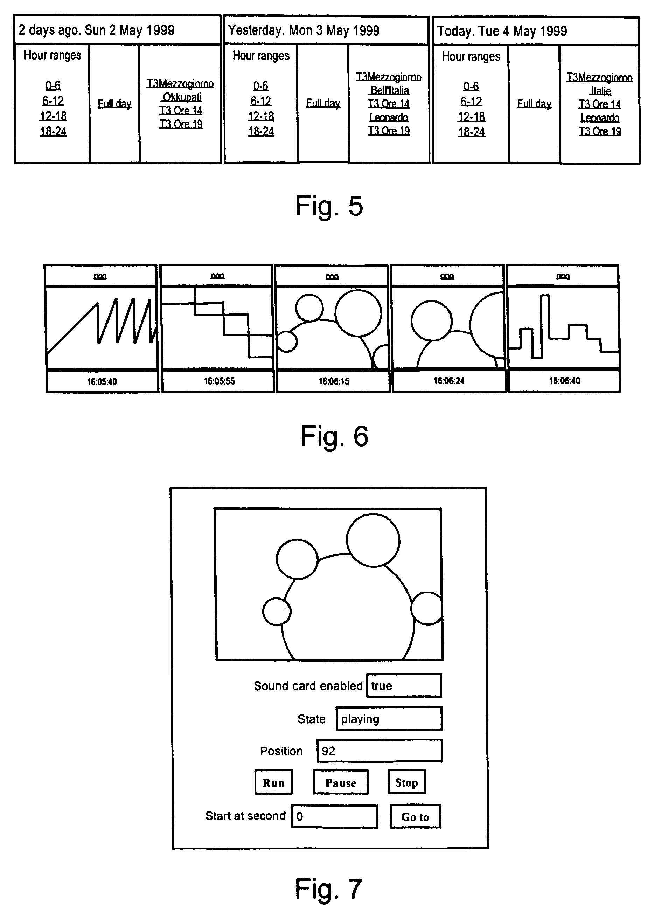

The main purpose of the user is to locate a program or portions of one or more programs of interest, as well as any information which might be associated with it, in the shortest possible time. Secondarily, the user should be able to synthetically replay the selected portion of the program, i.e. hear the audio information and see the associated images. As shown on Fig. 4, in order to achieve such goal the user interacts with server S, calling from his browser a URL (Universal Resource Locator) localized on the server. The server executes the operations defined by the URL, and returns to the user a response comprising an HTML page. In response to a Request for service, the server generates and presents and index of contents to the user (see Fig. 5), among which the user makes a Selection. The server then generates a sequence of consecutive images (schematized on Fig. 6) containing time references, and each associated to a link allowing the user to submit a further Request for audio-video replay. Server S responds to this request by presenting a Table of synthetic audio-video replay (see Fig. 7), where the user can select time values and other parameters, and run the replay by means of buttons *Run, Stop,* *Pause* and the like. With this function, server S delivers to the user the simultaneous replay of the audio and display of the corresponding image.

The user can also obtain on his browser images for any desired time in a program or within the set of programs in one day.

Implementing "Web"-type services as described above is easy for the person skilled in the art once the specific performances requested have been defined (as above), and, accordingly, a detailed description of the software is omitted, for the sake of simplicity.

A program in server S, e.g. a so-called "daemon", periodically examines the directories and erases files which are older than a predetermined time period, which, in the preferred embodiment of the invention, is a period of three days. The erasing could take place, for instance every day at midnight.

The person skilled in the art will understand that the invention as disclosed above is able to store and display in a synthetic manner the daily programs of several channels (say, the six or seven most important channels in a given territory) for a period of three days or even a week, with and occupation of mass storage that is compatible with commonly available rigid disks, and using a low-cost hardware, such as PC-class computers, both for the acquisition stations and for the server. However, the invention, as will be evident for a person skilled in the art, could also be used, with appropriate adjustments, also for monitoring, for instance, a single periodic program of interest, the documentation of which can be stored in an archive for months or even years.

A preferred example of embodiment of the invention has been described, but, of course, numerous changes and modifications are possible within the scope of the invention, depending on circumstances. More particularly, tuner devices R1, R2, ... could be replaced with other kinds of receiver apparatus, e.g. where the signal should be available in baseband, as it would be on the premises of the very broadcasting station.

Also, even the PAL card with A/D converter might be dispensed with, or might be replaced with other appropriate converter circuits, e.g. where the signal should already be available in digital format. Finally, although the description above refers to a system comprising one server and a number of acquisition stations connected in a local network, the acquisition stations could be cards that are directly inserted on the internal bus of the digital computer acting as a server, each card having direct access to the server's mass storage under control of the multitasking operating system of the latter.

The audio and video formats also might be chosen differently, as well as several parameters such as the resolution level of the images, the time rate of image acquisition (when there are no changes of scene), the durations of the audio segments, the format of the index file, and the like. The algorithm for detecting changes of scene might also be replaced with another known algorithm.

## Claims

1. A system for synthetically acquiring and replaying television programs, characterized in that it comprises:
- a multi-tasking, multi-user server provided with a mass storage capable of containing a plurality of audio files, of image files and of index files containing time references for synchronizing audio and video from said files;
- at least one multimedial acquisition station linked to said server, and capable of:
receiving the global television signal from a selected television channel, extract from it an audio signal and deliver the audio signal to said server for recording in said mass storage as successive digital files, each comprising an audio segment of a predetermined duration;
extracting a video signal for acquiring from it a fixed screenshot at each change of scene or after a predetermined time interval from the previous screenshot and delivering each acquired screenshot to said server for recording in said mass storage as an image file;
periodically generating and delivering to said server, for recording in said mass storage, an index file containing time references for synchronizing audio and video from said audio files and image files;
- at least one user station linked to said server and provided with a browser program for reading said index files and consequently said audio files and image files.

2. The system for synthetically acquiring and replaying television programs of claim 1, characterized in that said acquiring station is a digital computer provided with a video grabbing card.

3. The system for synthetically acquiring and displaying television programs of claim 1 or 2, characterized in that each acquiring station also records each generated file in a mass storage of its own.

4. The system for synthetically acquiring and replaying television programs of any of claims 1 to 3, characterized in that said audio files are PCM-coded.

5. The system for synthetically acquiring and replaying television programs of any of claims 1 to 3, characterized in that said audio signals are coded in compressed form.

6. The system for synthetically acquiring and replaying television programs of any of claims 1 to 5, characterized in that said image files are JPEG-coded.

7. The system for synthetically acquiring and replaying television programs of any of claims 1 to 6, characterized in that, for the determination of a change of scene in said television signal, the acquiring station is programmed for executing the following procedure:
- compute the summation of the absolute values of the differences between average luminance values of selected blocks from each pair of successive frames of the television signal sampled at a selected resolution, in order to obtain successive values of absolute difference;
- compute the average of the values of absolute difference obtained for the pairs of frames that are previous and following to each pair of frames;
- decide the occurrence of a change of scene whenever the absolute difference with respect to said average exceeds a predetermined threshold.

8. The system for synthetically acquiring and replaying television programs of claim 7, characterized in that said summation of differences is computed on one field of each pair of successive frames.

9. The system for synthetically acquiring and replaying television programs of any of claims 2 to 8, characterized in that it comprises a plurality of acquiring stations, each being linked to the server in a local network.

10. The system for synthetically acquiring and replaying television programs of any of claims 1 to 6, characterized in that it comprises a plurality of acquiring stations, each being connected to the internal bus of the server.
